# EUROPEAN PATENT APPLICATION

(11) **EP 4 395 333 A1**
(43) Date of publication of application: **03.07.2024**
(21) Application number: 22871794.8
(22) Date of filing: 05.09.2022
(51) Int. Cl.: H04N 21/41

(54) **METHOD FOR CONTROLLING MULTI-SCREEN SYSTEM, AND MEDIUM AND ELECTRONIC DEVICE THEREOF**

(30) Priority: 27.09.2021 CN 202111134657
(71) Applicant: Huawei Technologies Co., Ltd., Shenzhen, Guangdong 518129 (CN)
(72) Inventor: HUANG, Yu, Shenzhen, Guangdong 518129 (CN); WU, Zhipeng, Shenzhen, Guangdong 518129 (CN); ZHANG, Huaxiang, Shenzhen, Guangdong 518129 (CN); LIU, Feng, Shenzhen, Guangdong 518129 (CN); HU, Shiyao, Shenzhen, Guangdong 518129 (CN)
(74) Representative: Gill Jennings & Every LLP
(86) International application number: PCT/CN2022/117076
(87) International publication number: WO 2023/045745

(57) **Abstract**

This application relates to the field of remote control technologies, and in particular, to a method for controlling a multi-screen system, a medium, and an electronic device. The multi-screen system provided in embodiments of this application includes at least a first display unit and a second display unit. The method includes: The first display unit establishes a communication connection to a remote control device; the first display unit displays a first display element in a focused state; the first display unit receives a first remote control instruction sent by the remote control device; the first display unit sends the first remote control instruction to the second display unit; and the second display unit displays, in response to the received first remote control instruction, a second display element in the focused state, where the first display element in the first display unit is no longer in the focused state. In embodiments of this application, the remote control device can control a plurality of display units in the multi-screen system only by establishing the communication connection to the first display unit, thereby implementing effect that one remote control conveniently controls a plurality of display units, and improving user experience.

## Description

This application claims priority to Chinese Patent Application No. 202111134657.3, filed with the China National Intellectual Property Administration on September 27, 2021 and entitled "METHOD FOR CONTROLLING MULTI-SCREEN SYSTEM, MEDIUM, AND ELECTRONIC DEVICE", which is incorporated herein by reference in its entirety.

### TECHNICAL FIELD

This application relates to the field of remote control technologies, and in particular, to a method for controlling a multi-screen system, a medium, and an electronic device.

### BACKGROUND

A multi-screen system may include a splicing screen formed by splicing a plurality of displays or display screens (which are referred to as display units below), or a multi-screen system includes a plurality of independent display devices (for example, any two or more of a tablet, a computer, or a smart screen).

Currently, a remote control is configured for each display unit in the multi-screen system, to control each display unit in the multi-screen system. In an entire control process in which a plurality of remote controls are used to control the plurality of display units, a user needs to change different remote controls. For example, in a scenario in which the plurality of display units in the splicing screen play same video content, the user needs to change remote controls to open video applications of the display units to play the video. Consequently, the control process is complex and time-consuming.

### SUMMARY

Embodiments of this application provide a method for controlling a multi-screen system, a medium, and an electronic device.

According to a first aspect, an embodiment of this application provides a method for controlling a multi-screen system. The multi-screen system includes at least a first display unit and a second display unit, and the method includes:
the first display unit establishes a communication connection to a remote control device;
the first display unit displays a first display element in a focused state;
the first display unit receives a first remote control instruction sent by the remote control device;
the first display unit sends the first remote control instruction to the second display unit; and
the second display unit displays, in response to the received first remote control instruction, a second display element in the focused state, where the first display element in the first display unit is no longer in the focused state.

It may be understood that the first remote control instruction may be a rightward remote control instruction, a downward remote control instruction, a leftward remote control instruction, an upward remote control instruction, or the like. However, this is not limited thereto.

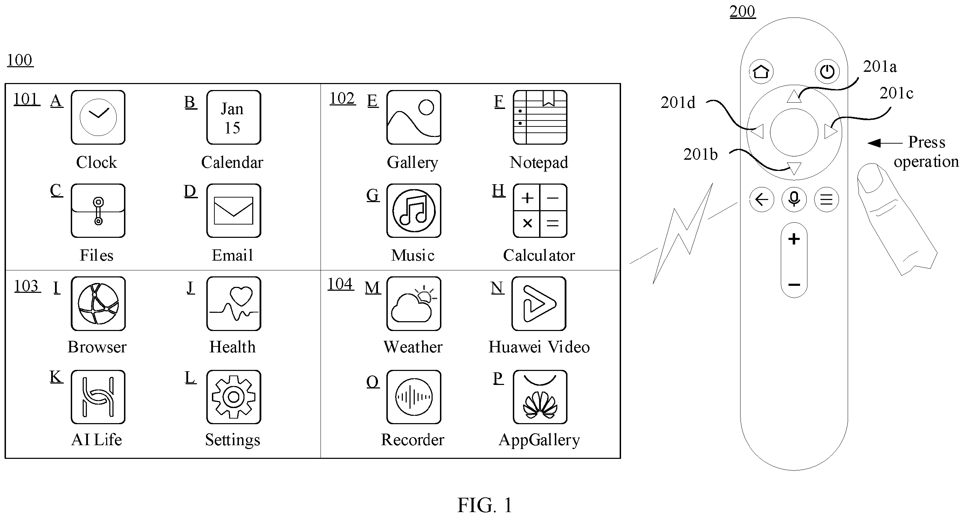

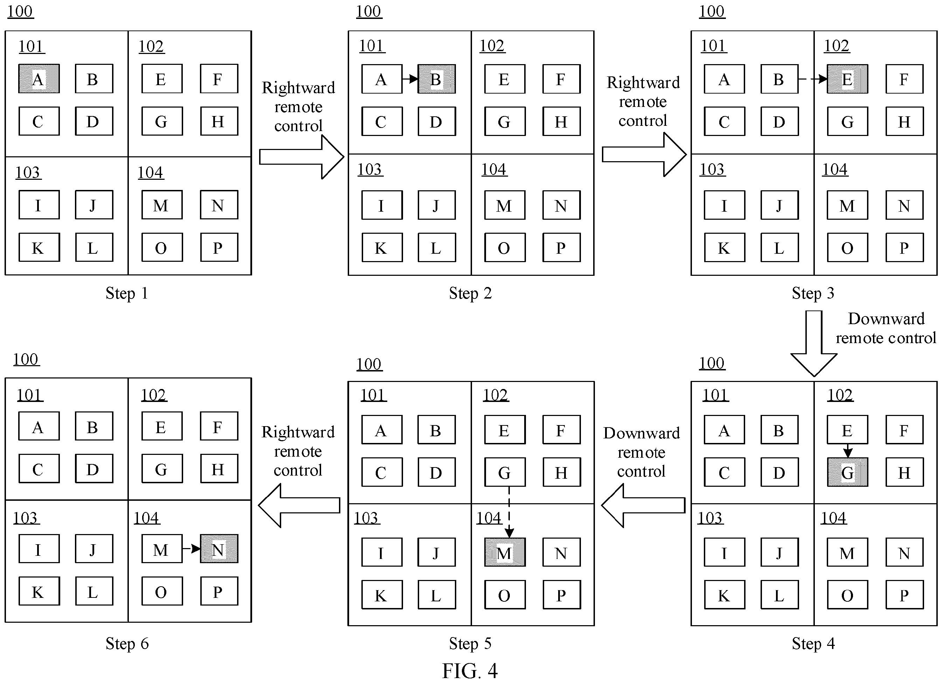

A focus is a display element (for example, an icon control, a search bar, or a display box displayed on the display unit) in the focused state. If a display element is in the focused state, when the display unit receives a confirmation instruction from a remote control, a corresponding function of the display element is triggered. For example, FIG. 4 is a schematic diagram that is corresponding to an application scenario shown in FIG. 1 and that is of a change of a display interface of a method for controlling a multi-screen system according to some embodiments of this application. As shown in step 1 in FIG. 4, a Clock icon control A is an icon control in the focused state. In this case, a display unit 101 receives the confirmation instruction from the remote control, and triggers to open a Clock application corresponding to the Clock icon control A. A user may control the focus to be transferred between icon controls by pressing up, down, left, and right buttons on the remote control.

In some implementations, the display element in the focused state and a display element that is not selected by the focus have different display effect, for example, have different display colors, brightness, and shapes. As shown in FIG. 4, a color of the Clock icon display element A selected by the focus in step 1 is different from a color of another display element that is not selected by the focus.

In this embodiment of this application, the remote control device can control at least the first display unit and the second display unit that are included in the multi-screen system only by establishing the communication connection to the first display unit. That is, in the method, for controlling the multi-screen system, provided in this embodiment of this application, the remote control device can operate all display units in the multi-screen system by pairing with any display unit in the multi-screen system without a plurality of times of pairing. In addition, a remote control operation is convenient and quick, thereby implementing effect that one remote control conveniently controls a plurality of display units, and improving user experience.

In a possible implementation of the first aspect, that the first display unit sends the first remote control instruction to the second display unit specifically includes: The first display unit sends the first remote control instruction to the second display unit based on that the first remote control instruction is a remote control instruction in a first direction, there is no other display element capable of entering the focused state in the first direction of the first display element, and a display unit in the first direction of the first display unit is the second display unit.

It may be understood that the first direction may be leftward, rightward, upward, downward, or the like.

In this embodiment of this application, the first display unit may automatically determine that a display unit to which the first display unit is to be transferred is the second display unit, thereby implementing effect that one remote control conveniently controls a plurality of display units, and improving user experience.

In a possible implementation of the first aspect, the multi-screen system further includes a third display unit, and the method further includes:
the first display unit receives a second remote control instruction sent by the remote control device;
the first display unit sends the second remote control instruction to the second display unit that is displaying a third display element in the focused state, where the third display element and the second display element are a same display element or different display elements;
the second display unit sends first identification information of the third display unit to the first display unit;
the first display unit sends the second remote control instruction to the third display unit based on the first identification information; and
in response to the received second remote control instruction, the third display unit displays a fourth display element in the focused state, where the third display element in the second display unit is no longer in the focused state.

It may be understood that the first identification information may include but is not limited to a Bluetooth MAC address, a Wi-Fi MAC address, an IP address, and the like of the display unit.

In this embodiment of this application, if a plurality of display units are further included between the first display unit and the second display unit, the first display unit may directly send the second remote control instruction to the third display unit based on the first identification information of the third display unit fed back by the second display unit, and the first display unit does not need to sequentially send a remote control instruction to the first display unit, the plurality of display units between the first display unit and the second display unit, the second display unit, and the third display unit, thereby reducing a quantity of times of forwarding the remote control instruction. In this way, to some extent, effect that one remote control conveniently, quickly, and efficiently controls a plurality of display units is implemented, and user experience is improved.

In a possible implementation of the first aspect, that the second display unit sends first identification information of the third display unit to the first display unit specifically includes:
the second display unit sends the first identification information of the third display unit to the first display unit based on that the second remote control instruction is a remote control instruction in a second direction, there is no other display element capable of entering the focused state in the second direction of the third display element, and a display unit in the second direction of the second display unit is the third display unit, where
the second direction and the first direction are a same direction or different directions.

In this embodiment of this application, if the plurality of display units are further included between the first display unit and the second display unit, the first display unit may directly send the second remote control instruction to the third display unit based on the first identification information of the third display unit fed back by the second display unit, and the first display unit does not need to sequentially send the remote control instruction to the first display unit, the plurality of display units between the first display unit and the second display unit, the second display unit, and the third display unit, thereby reducing the quantity of times of forwarding the remote control instruction. In this way, to some extent, effect that one remote control conveniently, quickly, and efficiently controls a plurality of display units is implemented, and user experience is improved.

In a possible implementation of the first aspect, that the second display unit displays, in response to the received first remote control instruction, a second display element in the focused state specifically includes:
the second display unit displays the second display element in the focused state based on the first remote control instruction and relative position information of each display element in the second display unit.

In this embodiment of this application, the second display unit automatically determines, according to the first remote control instruction sent by the first display unit, the second display element that is to be in the focused state, thereby implementing effect that one remote control conveniently controls a plurality of display units, and improving user experience.

It may be understood that the display unit may be a control. Relative position information of each control may be used to identify a focus transfer policy of the control by using relative position information (which may also be referred to as a focus transfer vector) of the control. A specific transfer vector is obtained based on a control coordinate magnitude relationship. The relative position information of the control is denoted as TransVec. A specific format is as follows:

| | | | |
|---|---|---|---|
| Upward transferred control | Downward transferred control | Leftward transferred control | Rightward transferred control |

As shown in a display unit 104 in FIG. 1, relative position information of each control in the display unit 104 includes the following.

A focus transfer policy of a Weather icon control M is used as an example. The focus transfer policy of the Weather icon control M includes: no upward transferred control, a downward transferred control (a Recorder icon control O), no leftward transferred control, and a rightward transferred control (a Huawei Video icon control N).

Therefore, TransVec of the Weather icon control M has no upward transferred control, the downward transferred control is the Recorder icon control O, a leftward transferred control is a Health icon control J, and the rightward transferred control is the Huawei Video icon control N. For example, in a possible implementation, a vector {-, O, -, N} may be used to record TransVec of the Weather icon control M. A first dimension and a third dimension of the vector are null values (which are denoted as "-"), and indicate that the Weather icon control M does not have an upward transferred control or a leftward transferred control.

When the display unit receives a remote control instruction sent by a remote control 200, if a current display unit in which a focus control is located has another control in a remote control direction, the focus is transferred to a control that is closest to the control and that is in the remote control direction; and if there is no control in a remote control direction, the focus cannot be transferred in the direction in the display unit, and focus transfer between display units is entered.

It may be understood that, in addition to the foregoing technology for calibrating position information of each control in the display unit, boundary calibration of controls in the display unit is also a technology for calibrating the position information of each control in the display unit. An implementation is as follows:

Each display unit needs to calibrate a remote-controllable boundary of the current display unit. The remote-controllable boundary is controls on uppermost, lowermost, leftmost, and rightmost edges in the display unit. The control includes but is not limited to a button, a unit frame, a check box, and another operation unit that can obtain a remote control focus. Based on a coordinate magnitude relationship of all controls on a page, control coordinates in this embodiment are coordinates of upper left corners of the controls, may calibrate upper, lower, left, and right boundary controls of the display unit, and are denoted as position information (a boundary control vector) BorderVec of the boundary controls. A specific format is as follows:

| | | | |
|---|---|---|---|
| Upper boundary control | Lower boundary control | Left boundary control | Right boundary control |

In FIG. 1, an upper left corner of the display unit 101 is used as an origin, a horizontal rightward direction is a positive direction of an X-axis, and a vertical downward direction is a positive direction of a Y-axis.

It is assumed that coordinates of the Clock icon control A, a Calendar icon control B, a Files icon control C, and an Email icon control D in the display unit 101 are respectively (X_{A}, Y_{A}), (X_{B}, Y_{B}), (Xc, Yc), and (X_{D}, Y_{D}). Because X_{A} = Xc < X_{B} = X_{D}, and Y_{A} = Y_{B} < Yc = Y_{D}, position information (a boundary control vector) BorderVec of boundary controls of the display unit 101 is {A, C, A, B}. A specific policy for determining BorderVec is as follows:
selecting a control with a smallest Y coordinate for an upper boundary and if there are a plurality of controls with smallest Y coordinates, selecting a control with a smallest X coordinate;
selecting a control with a largest Y coordinate for a lower boundary and if there are a plurality of controls with largest Y coordinates, selecting a control with a smallest X coordinate;
selecting a control with a smallest X coordinate for a left boundary and if there are a plurality of controls with smallest X coordinates, selecting a control with a smallest Y coordinate; and
selecting a control with a largest X coordinate for a right boundary and if there are a plurality of controls with largest X coordinates, selecting a control with a smallest Y coordinate.

Similarly, it may be determined, by using the policy, that BorderVec of a display unit 102 is {E, G, E, F}, BorderVec of the display unit 104 is {M, O, M, N}, and BorderVec of a display unit 103 is {I, K, I, J}.

In some embodiments, BorderVec may be used to determine a control on which the focus should be located when the focus enters the display unit. For example, in step 3 of transferring the focus from the Calendar icon control B to a Gallery icon control E, the display unit 102 receives a rightward remote control instruction forwarded by the display unit 101 to the display unit 102, and the display unit 102 determines, based on BorderVec: {E, G, E, F} of the display unit 102, that a left ("right" is reversed) boundary control of the display unit 102 is the Gallery icon control E. Therefore, the display unit 102 determines that the focus should be located on the Gallery icon control E. In this way, the display unit 102 enables the Gallery icon control E to enter the focused state.

In a possible implementation of the first aspect, near field communication NFC modules are disposed on edges of the first display unit and the second display unit, and the NFC modules are configured to read identification information of an adjacent display unit.

In this embodiment of this application, the NFC module reads the identification information of the adjacent display unit at a short distance, thereby, to some extent, improving security of identification information transmission, implementing effect that one remote control conveniently and securely controls a plurality of display units, and improving user experience.

In a possible implementation of the first aspect, a first NFC module is disposed on a first edge of the first display unit, a second NFC module is disposed on a second edge of the second display unit, the first edge is adjacent to the second edge, and the method further includes:
the first display unit reads, by using the first NFC module, second identification information that is of the second display unit and that is written in the second NFC module, where
the second identification information is used by the first display unit to send the first remote control instruction to the second display unit based on the second identification information.

In this embodiment of this application, because the first edge is adjacent to the second edge, the first display unit may quickly read, by using the first NFC module, the second identification information that is of the second display unit and that is written in the second NFC module, thereby implementing effect that one remote control conveniently and quickly controls a plurality of display units.

In a possible implementation of the first aspect, the first display element and the second display element each include any one or more of the following: an icon control, a search bar, a check box, an option button, and a button control.

In a possible implementation of the first aspect, the first display unit and the second display unit each include any one or more of the following: a display, a tablet, a computer, a television, a smart screen, and a large-screen device.

In a possible implementation of the first aspect, the remote control device includes a remote control and/or a terminal device.

According to a second aspect, an embodiment of this application provides a computer-readable storage medium. The computer-readable storage medium stores instructions, and when the instructions are executed on a first display unit, the first display unit is enabled to perform the steps performed by the first display unit in the method according to any one of the first aspect.

According to a third aspect, an embodiment of this application provides an electronic device, including one or more processors and a memory. The memory stores one or more computer programs, the one or more computer programs include instructions, and when the instructions are executed, the electronic device is enabled to perform the steps performed by the first display unit in the method according to any one of the first aspect.

### BRIEF DESCRIPTION OF DRAWINGS

FIG. 1 is a schematic diagram of an application scenario of a method for controlling a multi-screen system according to some embodiments of this application;
FIG. 2 is a schematic diagram of a structure of a splicing screen 100 applicable to an embodiment of this application according to some embodiments of this application;

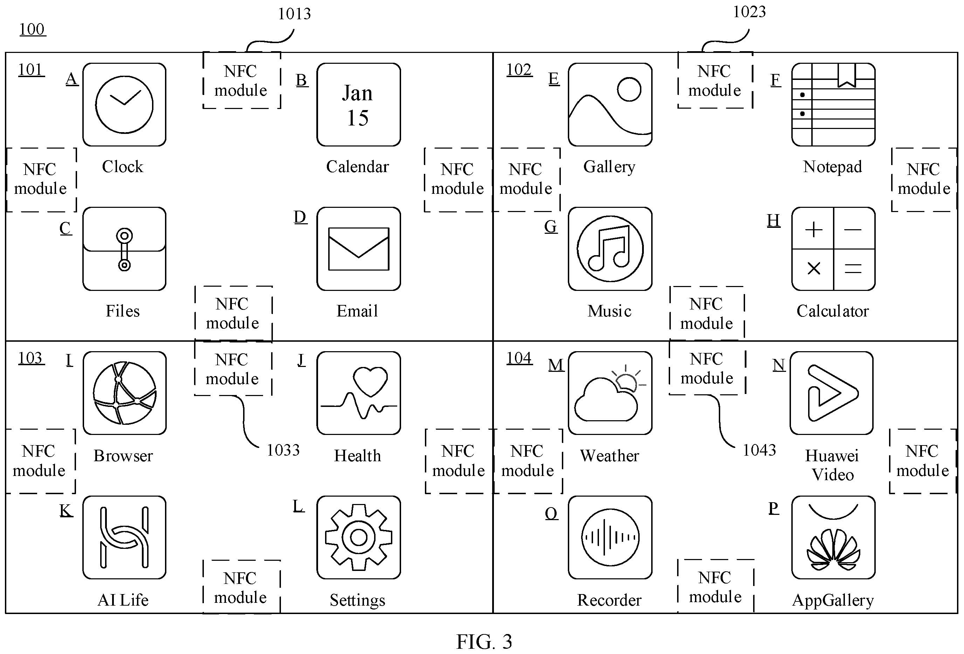

FIG. 3 is a schematic diagram of a layout of NFC modules in a splicing screen 200 according to some embodiments of this application;
FIG. 4 is a schematic diagram that is corresponding to an application scenario shown in FIG. 1 and that is of a change of a display interface of a method for controlling a multi-screen system according to some embodiments of this application;
FIG. 5 is a schematic flowchart of interaction that is of transferring a focus from a paired display unit 101 to a non-paired display unit 102 and that is corresponding to step 3 in FIG. 4 according to some embodiments of this application;
FIG. 6 is a schematic flowchart of interaction that is of transferring a focus from a non-paired display unit 102 to a non-paired display unit 104 and that is corresponding to step 5 in FIG. 4 according to some embodiments of this application;
FIG. 7 is a schematic flowchart of a method for controlling a splicing screen according to some embodiments of this application;
FIG. 8 is a schematic diagram of a remote control interface of a mobile phone 300 according to some embodiments of this application;
FIG. 9 is a user interface (User Interface, UI) for inputting relative position information between display units according to some embodiments of this application; and
FIG. 10 is a schematic diagram of an application scenario of another method for controlling a multi-screen system according to some embodiments of this application.

### DESCRIPTION OF EMBODIMENTS

Illustrative embodiments of this application include but are not limited to a method for controlling a multi-screen system, a medium, and an electronic device.

For ease of description, the following uses a splicing screen as an example to describe technical solutions in embodiments of this application with reference to a specific application scenario.

FIG. 1 is a schematic diagram of an application scenario of a method for controlling a multi-screen system according to some embodiments of this application.

As shown in FIG. 1, in this application scenario, a user may control each display unit in a splicing screen 100 by using a remote control 200. A communication connection may be established between the splicing screen 100 and the remote control 200 in a wired or wireless manner. The splicing screen 100 includes display units 101 to 104. It may be understood that, although only the display units 101 to 104 are included herein, in another embodiment, the splicing screen 100 may further include less than four display units or more than four display units.

To resolve the technical problem mentioned in the background, an embodiment of this application provides a remote control solution for a multi-screen system. For the scenario shown in FIG. 1, after the user uses the remote control 200 to control one display unit, for example, the display unit 101, if the user wants to use the remote control 200 to control another display unit in the splicing screen, for example, the display unit 102, a wireless connection to the display unit 101 is first disconnected by the user, and then a wireless connection to the display unit 102 is established, to control the display unit 102.

In this manner, although a plurality of remote controls are simplified into one remote control to control the splicing screen, in an entire control process of this embodiment of this application, the remote control needs to be switched by the user for a plurality of times to be connected to different display units. The control process is still extremely complex and time-consuming.

For ease of understanding, the following explains a related noun "focus" in embodiments of this application.

A focus is a display element (for example, an icon control, a search bar, or a display box displayed on the display unit) in a focused state. If a display element is in the focused state, when the display unit receives a confirmation instruction from the remote control, a corresponding function of the display element is triggered. For example, FIG. 4 is a schematic diagram that is corresponding to an application scenario shown in FIG. 1 and that is of a change of a display interface of a method for controlling a multi-screen system according to some embodiments of this application. As shown in step 1 in FIG. 4, a Clock icon control A is an icon control in the focused state. In this case, the display unit 101 receives the confirmation instruction from the remote control, and triggers to open a Clock application corresponding to the Clock icon control A. The user may control the focus to be transferred between icon controls by pressing up, down, left, and right buttons on the remote control.

In some implementations, the display element in the focused state and a display element that is not selected by the focus have different display effect, for example, have different display colors, brightness, and shapes. As shown in FIG. 4, a color of the Clock icon display element A selected by the focus in step 1 is different from a color of another display element that is not selected by the focus.

To simplify a process in which the remote control controls a plurality of display units in the splicing screen, an embodiment of this application further provides a control solution in which the remote control controls the splicing screen. The scenario shown in FIG. 1 is used as an example. In the control solution provided in this embodiment of this application, the remote control only needs to establish a communication connection to one of the display units in the splicing screen, to control the focus to be transferred between different display units in the splicing screen, thereby implementing effect that a plurality of display units can be controlled in a case in which one remote control establishes a communication connection to one display unit.

Specifically, in an implementation, each display unit in the splicing screen may obtain: (1) a relative position relationship (which is referred to as "relative position information of the display unit" below) between the display unit and a display unit adjacent to the display unit, and (2) relative position information (which is referred to as "relative position information of a display element" or "relative position information of a control") of each display element (for example, an icon control, a search bar, or a display box displayed on the display unit) in the display unit. After receiving a remote control instruction, the display unit connected to the remote control determines whether to forward the remote control instruction to another display unit. In addition, if forwarding needs to be performed, the display unit determines, based on relative position information of the display unit, a display unit to which the remote control instruction needs to be forwarded. Then, the display unit that receives the forwarded remote control instruction determines, based on relative position information of a display element in the display unit, a display element that is in the display unit and in which a final target of the focus needs to be located, and then enables the display element to enter the focused state. In this case, the user may tap an OK button on the remote control to trigger a function corresponding to the display element. Therefore, in this embodiment of this application, effect that one remote control conveniently controls a plurality of display units is implemented.

For example, in the application scenario shown in FIG. 1, in a scenario 1 in which the user wants to transfer, by using the remote control 200, the focus from a Calendar icon control B to a Gallery icon control E (transfer the focus from a paired display unit to a non-paired display unit), to open Gallery and view a picture in Gallery, the display unit 101 currently establishes a wireless connection to the remote control 200, and the display unit 101 may obtain relative position information between the display unit 101 and the display units 102 and 103 adjacent to the display unit 101 (where the display unit 102 is located on a right side of the display unit 101, and the display unit 103 is located on a lower side of the display unit 101). If a current focus is the Calendar icon control B in the display unit 101, when the user presses a rightward remote control button 201c, after the display unit 101 receives a rightward remote control instruction, the display unit 101 may determine to forward the remote control instruction to another display unit based on that the remote control instruction is a rightward remote control instruction, and there is no control that can be selected on a right side of the Calendar icon control B in the display unit 101, and determine, based on the foregoing relative position information between the display unit 101 and another display unit, that a final transfer target of the focus is located in the display unit 102. Then, the display unit 101 sends the foregoing rightward remote control instruction to the display unit 102. After receiving the rightward remote control instruction, the display unit 102 determines, based on the rightward remote control instruction and relative position information of display elements (the Gallery icon control E in an upper left corner, a Music icon control G in a lower left corner, a Notepad icon control F in an upper right corner, and a Calculator icon control H in a lower right corner) in the display unit 102, that the final transfer target of the focus needs to be located on the Gallery icon control E in the display unit 102. In this way, the display unit 102 enables the Gallery icon control E to enter the focused state, so that after the user presses the OK button on the remote control, the Gallery application may be opened. This implements a function of controlling a plurality of display units on the splicing screen by one remote control.

For another example, in the application scenario shown in FIG. 1, in a scenario 2 in which the user wants to transfer, by using the remote control 200, the focus from a Music icon control G to a Weather icon control M (transfer the focus from a non-paired display unit to a non-paired display unit), to open a Weather application, the display unit 101 currently establishes a wireless connection to the remote control 200. If a current focus is the Music icon control G in the display unit 102, when the user presses a downward remote control button 201b, after the display unit 101 receives a downward remote control instruction, the display unit 101 sends the downward remote control instruction to the display unit 102. The display unit 102 may determine, based on relative position information between the display unit 102 and the display units 101 and 104 (where the display unit 101 is located on a left side of the display unit 102, and the display unit 104 is located on a lower side of the display unit 101), identification information of a display unit to which the focus is finally transferred, namely, identification information of the display unit 104. Then, the display unit 102 feeds back the identification information of the display unit 104 to the display unit 101. The display unit 101 sends the downward remote control instruction to the display unit 104 based on the identification information of the display unit 104. After receiving the downward remote control instruction, the display unit 104 determines, based on the remote control instruction and relative position information of display elements (the Weather icon control M in an upper left corner, a Recorder icon control O in a lower left corner, a Huawei Video icon control N in an upper right corner, and an AppGallery icon control P in a lower right corner) in the display unit 104, that a final transfer target of the focus is the Weather icon control M in the display unit 104. After the user presses the OK button on the remote control, the Weather application is opened. This implements a function of controlling a plurality of display units on the splicing screen by one remote control.

In the foregoing scenario 2, each display unit has only relative position information of display elements in the display unit. Therefore, in a case in which the display unit 102 receives the downward remote control instruction, regardless of whether the current focus is the Music icon control G or a Calculator icon control H, the focus can only be transferred to a target control according to a set transfer policy, for example, transferred to a leftmost control in the display unit 104 on a lower side of the display unit 102, for example, the Weather icon control M.

In addition, in another embodiment, if it is set that the Calculator icon control H is transferred to the Huawei Video icon control N, the display unit 104 further needs to obtain position information of a control on which the focus is located previously, to be specific, the display unit 104 further needs to obtain relative position information between a boundary control in a display unit adjacent to the display unit 104 and a boundary control in the display unit 104. For example, the Weather icon control M is on a lower side of the Music icon control G, the Huawei Video icon control N is on a lower side of the Calculator icon control H, and the Weather icon control M is on a left side of the Health icon control I. Therefore, the display unit 104 needs to enable the transferred focus to select the control N in the upper right corner of the display unit 104 instead of selecting the control M in the upper left corner. The display unit 104 may obtain relative position information between the display unit 104 and boundary controls in the display unit 103 and the display unit 102 in the following manner: The display unit 102 first sends coordinate information of the Calculator icon control H to the display unit 101, so that the display unit 101 forwards the coordinate information of the Calculator icon control H to the display unit 104, and the display unit 104 determines, based on the coordinate information of the Calculator icon control H, a control that is on an interface of the display unit 104 and on which the transferred focus is located, for example, the Huawei Video icon control N. However, this is not limited to this manner.

For example, in the application scenario shown in FIG. 1, in a scenario 3 in which the user wants to transfer, by using the remote control 200, the focus from the Calculator icon control H to the Huawei Video icon control N (transfer the focus from a non-paired display unit to a non-paired display unit), to open a Huawei Video application, the display unit 101 currently establishes a wireless connection to the remote control 200. If a current focus is the Calculator icon control H in the display unit 102, when the user presses a downward remote control button 201b, after the display unit 101 receives a downward remote control instruction, the display unit 101 sends the downward remote control instruction to the display unit 102. The display unit 102 may determine, based on relative position information between the display unit 102 and the display units 101 and 104 (where the display unit 101 is located on a left side of the display unit 102, and the display unit 104 is located on a lower side of the display unit 101), identification information of a display unit to which the focus is finally transferred, namely, identification information of the display unit 104. Then, the display unit 102 feeds back the identification information of the display unit 104 to the display unit 101. The display unit 101 sends the downward remote control instruction to the display unit 104 based on the identification information of the display unit 104. After receiving the downward remote control instruction, the display unit 104 determines, based on the remote control instruction and relative position information of display elements in the display unit 104, that a final transfer target of the focus is the Huawei Video icon control N in the display unit 104. After the user presses the OK button on the remote control, the Weather application is opened. This implements a function of controlling a plurality of display units on the splicing screen by one remote control.

In this way, in this embodiment of this application, any display unit in the splicing screen is paired with the remote control, so that a function of controlling a plurality of display units in the splicing screen by one remote control can be implemented, and the remote control does not need to be switched for a plurality of times to be connected to different display units, thereby simplifying an entire control process, reducing time consumption, and improving user experience.

The following specifically describes technical details of a manner in an embodiment of this application in which a display unit paired with the remote control controls the display unit or another display unit in the splicing screen to select a target control when receiving a remote control instruction sent by the remote control.

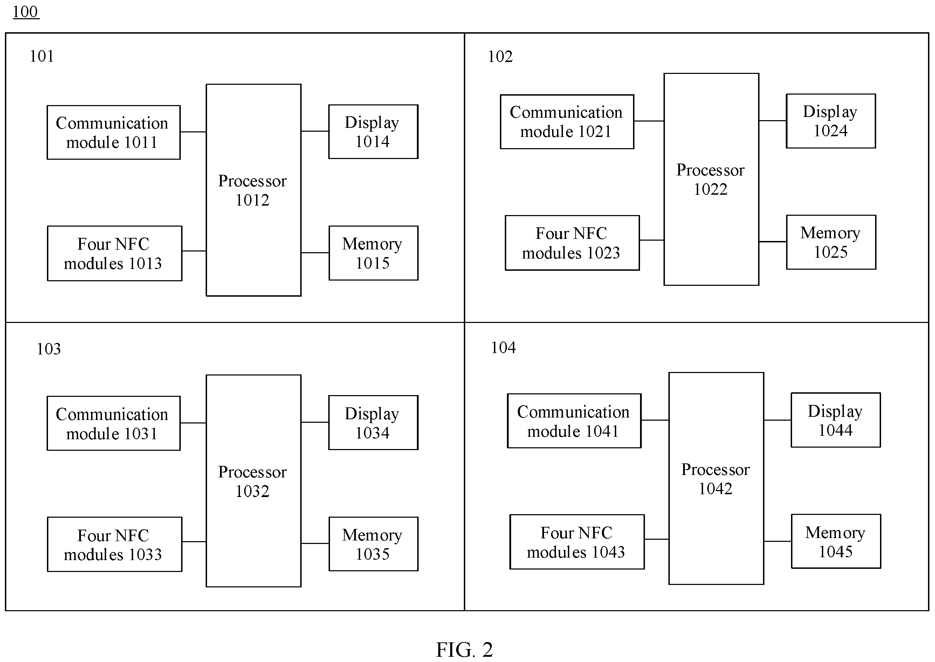

FIG. 2 is a schematic diagram of a structure of a splicing screen 100 applicable to an embodiment of this application according to some embodiments of this application. As shown in FIG. 2, the display unit 101 of the splicing screen 100 may include a communication module 1011, a processor 1012, four NFC modules 1013, a display 1014, and a memory 1015. The communication module 1011, the four NFC modules 1013, the display 1014, and the memory 1015 are separately connected to the processor 1012.

The display unit 102 to the display unit 104 of the splicing screen 100 also have a same structure as the display unit 101.

It may be understood that the structure shown in this embodiment of this application does not constitute a specific limitation on the splicing screen 100. In some other embodiments of this application, the splicing screen 100 may include more or fewer components than those shown in the figure, combine some components, split some components, or have different component arrangements. The components shown in the figure may be implemented by hardware, software, or a combination of software and hardware.

Communication modules 1011 to 1041 each may include an antenna, and receive and send an electromagnetic wave through the antenna. The communication modules 1011 to 1041 may provide a wireless communication solution that is applied to the splicing screen 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, 2G/3G/4G/5G, a subsequent wireless standard protocol and the like. The display units 101 to 104 may communicate with a network and another device by using a wireless communication technology. In this embodiment of this application, any one of the display units 101 to 104 may establish a communication connection to the remote control 200 by using the communication modules 1011 to 1041, and receive the remote control instruction sent by the remote control 200. A communication connection may also be established between the display units 101 to 104 by using the communication modules 1011 to 1041, and remote control instructions and identification information of the display units are mutually transmitted.

Processors 1012 to 1042 each may include one or more processing units, for example, may include a processing module or a processing circuit such as a CPU, an ISP, a graphics processing unit (Graphics Processing Unit, GPU), a DSP, a microprocessor (Micro-programmed Control Unit, MCU), an artificial intelligence (Artificial Intelligence, AI) processor, or a programmable logic device (Field Programmable Gate Array, FPGA). Different processing units may be independent devices, or may be integrated into one or more processors. A storage unit may be disposed in each of the processors 1012 to 1042, and is configured to store instructions and data. The processors 1012 to 1042 may separately perform the method for controlling the multi-screen system in this embodiment of this application. For example, steps performed by the display unit 101, the display unit 102, and the display unit 103 in the foregoing scenario 1 and scenario 2 may be respectively performed by the processor 1012, the processor 1013, and the processor 1014.

Displays 1014 to 1044 are configured to display a human-computer interaction interface, an image, a video, and the like. The displays 1014 to 1044 each include a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In this embodiment of this application, the displays 1014 to 1044 may respectively display display content formed by the processors 1012 to 1042 by performing the method for controlling the multi-screen system in this embodiment of this application.

NFC modules 1013 to 1043 each are configured to read identification information of an adjacent display unit stored in an NFC module of the adjacent display unit. In addition, in another embodiment, the NFC modules 1013 to 1043 each are further configured to read position information of an adjacent display unit stored in an NFC module of the adjacent display unit.

The following specifically describes some examples in which the display unit may read, by using the NFC module, identification information of another one or more display units adjacent to the display unit, or read identification information and position information of another one or more display units.

In an implementation, each NFC module stores position information of the NFC module and identification information of the display unit, and each NFC module reads position information and identification information that are stored in an NFC module of another display unit. For example, an NFC module 1023 on a left side inside the display unit 102 stores position information "left" that the NFC module 1023 is located on the left side inside the display unit 102, and identification information of the display unit 102. Therefore, "left" and the identification information of the display unit 102 are read by an NFC module 1013 on a right side inside the display unit 101, and reported to the processor 1012 of the display unit 101. The processor 1012 obtains a reverse direction based on position information "left", learns that the display unit 102 is located on the right side of the display unit 101, and establishes a correspondence between the identification information of the display unit 102 and a position "right".

In another implementation, each NFC module stores position information of the NFC module, and each NFC module reads identification information stored in an NFC module of another display unit. For example, an NFC module 1013 on a right side inside the display unit 101 reads identification information in an NFC module 1023 on a left side inside the display unit 102, and then reports position information "right" of the NFC module 1013 and the identification information of the display unit 102 to the processor 1012 of the display unit 101. Therefore, the processor 1012 learns that the display unit 102 is located on the right side of the display unit 101, and establishes a correspondence between the identification information of the display unit 102 and a position "right".

In still another implementation, each NFC module stores position information of the NFC module, each NFC module reports only identification information read by the NFC module, and the memory stores position information corresponding to each NFC module in the display unit. For example, an NFC module 1013 on a right side inside the display unit 101 reads identification information in an NFC module 1023 on a left side inside the display unit 102, and then reports the identification information of the display unit 102 to the processor 1012 of the display unit 101. The processor 1012 obtains, from the memory 1015 of the display unit 101, position information "right" of the NFC module 1013 on the right side inside the display unit 101. Therefore, the processor 1012 learns that the display unit 102 corresponding to the identification information reported by the NFC module 1013 is located on the right side of this display unit, and establishes a correspondence between the identification information of the display unit 102 and a position "right".

In addition, in some scenarios, the display unit rotates. If each NFC module stores position information, the position information stored in each NFC module may also dynamically change, to cope with a scenario in which a screen rotates in a direction. For example, if the display unit 102 is switched from a landscape mode to a portrait mode, left and right sides are changed to up and down sides, and up and down sides are changed to left and right sides. In this case, position information corresponding to each NFC module 1023 in the display unit 102 may be updated with reference to sensor data obtained by devices such as a gyroscope and a gravity sensor in the display unit 102. Specifically, if the display unit 102 is switched from a landscape mode to a portrait mode by rotating clockwise by 90°, an NFC module 1023 previously located on a lower side inside the display unit 102 becomes an NFC module 1023 located on a left side inside the display unit 102. In this case, the processor 1022 of the display unit 102 may control updated position information to be written into each NFC module 1023 based on the obtained sensor data.

If the memory of the display unit stores the position information corresponding to each NFC module in the display unit, when the screen rotates in the direction, the processor may control to write the updated position information corresponding to each NFC module into the memory. An example in which the display unit 102 is switched from the landscape mode to the portrait mode by rotating clockwise by 90° is still used. The processor 1022 may control an updated correspondence between each NFC module 1023 and the position information to be written into the memory 1025 of the display unit 102.

Certainly, when the display unit rotates, the position information stored in each NFC module may not be updated, and the position information corresponding to each NFC module recorded by the memory may not be updated. Instead, after the processor receives the identification information reported by each NFC module, correction of position information corresponding to the identification information reported by the NFC is implemented based on the sensor data.

It may be understood that, in another embodiment, a technology for identifying the position information and the identification information of the display unit includes but is not limited to using an NFC technical means, and may also include using UWB and another technical means.

Specifically, a method for controlling a splicing screen includes: a control case in which the focus is transferred inside the display unit, a control case in which the focus is transferred from a display unit (which is briefly referred to as a paired display unit below) paired with the remote control to a display unit (which is briefly referred to as a non-paired display unit below) that is not paired with the remote control, and a control case in which the focus is transferred from a non-paired display unit to another non-paired display unit. The following specifically describes, in different cases, the technical solutions of this application based on procedures in FIG. 1 and FIG. 4.

Corresponding to FIG. 1, FIG. 4 is a schematic flowchart in which a focus is sequentially transferred from a Clock icon control A in a display unit 101 to a Huawei Video icon control N in a display unit 102 by using a method that is for controlling a multi-screen system and that is in an embodiment of this application according to some embodiments of this application. Six steps are included.

Step 1 is a process in which the focus selects the Clock icon control A, namely, a process of determining that a current focus control is the Clock icon control A.

Step 2 is a process of transferring the focus from selecting the Clock icon control A to selecting the Calendar icon control B, namely, a process of changing the current focus control from the Clock icon control A to the Calendar icon control B, where both the Clock icon control A and the Calendar icon control B are controls in the display unit 101.

Step 3 is a process of transferring the focus from selecting the Calendar icon control B to selecting the Gallery icon control E, namely, a process of changing the current focus control from the Calendar icon control B to the Gallery icon control E, where the Calendar icon control B is a control in the display unit 101, and the Gallery icon control E is a control in the display unit 102.

Step 4 is a process of transferring the focus from selecting the Gallery icon control E to selecting the Music icon control G, namely, a process of changing the current focus control from the Gallery icon control E to the Music icon control G, where both the Gallery icon control E and the Music icon control G are controls in the display unit 102.

Step 5 is a process of transferring the focus from selecting the Music icon control G to selecting the Weather icon control M, namely, a process of changing the current focus control from the Music icon control G to the Weather icon control M, where the Music icon control G is a control in the display unit 102, and the Weather icon control M is a control in the display unit 103.

Step 6 is a process of transferring the focus from the Weather icon control M to selecting the Huawei Video icon control N, namely, a process of changing the current focus control from the Weather icon control M to the Huawei Video icon control N, where both the Weather icon control M and the Huawei Video icon control N are controls in the display unit 103.

It is assumed that the display unit 101 is a display unit paired with the remote control 200, a remote control instruction generated when the user presses a button on the remote control 200 is first sent to the display unit 101, and then the display unit 101 determines a response policy for the remote control instruction.

In a possible implementation, a specific process of steps 1 to 6 may be as follows:
Step 1: The focus is on the Clock icon control A.
Step 2: When the display unit 101 receives the rightward remote control instruction sent by the remote control 200, the display unit 101 detects that there is the Calendar icon control B on a right side of the Clock icon control A in the display unit 101, so that the focus is transferred to the Calendar icon control B.
Step 3: When the display unit 101 receives the rightward remote control instruction sent by the remote control 200, the display unit 101 detects that there is no control on a right side of the Calendar icon control B in the display unit 101, so that the focus is transferred to the display unit 102 on the right side, and is transferred to the Gallery icon control E in the display unit 102. In some embodiments, the display unit 101 determines, based on relative position information of the display unit, that there is the display unit 102 on the right side of the display unit 101, so that the display unit 101 determines to perform focus transfer between display units, and forwards the rightward remote control instruction to the display unit 102. The display unit 102 obtains the rightward remote control instruction, and determines, based on relative position information of the display elements in the display unit, that the focus needs to be transferred to the Gallery icon control E in the display unit 102, to change the Gallery icon control E to the focused state. In some embodiments, the display unit 101 may record information that indicates that a subsequently received remote control instruction needs to be forwarded to the display unit 102, so that the display unit 101 forwards the subsequently received remote control instruction to the display unit 102 based on the information.
Step 4: When receiving the downward remote control instruction sent by the remote control 200, the display unit 101 sends the downward remote control instruction to the display unit 102. When receiving the downward remote control instruction sent by the display unit 101, the display unit 102 detects that there is the Music icon control G under the Gallery icon control E in the display unit 102, so that the focus is transferred to the Music icon control G. In some embodiments, the display unit 101 may forward, to the display unit 102 based on the information that is recorded in step 3 and that indicates that the remote control instruction needs to be forwarded to the display unit 102, the downward remote control instruction received in step 4.
Step 5: When receiving the downward remote control instruction sent by the remote control 200, the display unit 101 sends the downward remote control instruction to the display unit 102. Because relative position information of the display unit 102 includes position information and the identification information of the display unit 104 adjacent to the display unit 102, when detecting that there is no control under the Music icon control G in the display unit 102, the display unit 102 may transfer the focus to the uppermost Weather icon control M of the display unit 104 on the lower side. In some embodiments, the display unit 101 forwards, to the display unit 102 based on the information that is recorded in step 3 and that indicates that the remote control instruction needs to be forwarded to the display unit 102, the downward remote control instruction received in step 5. In some embodiments, when detecting that there is no control under the Music icon control G in the display unit 102, the display unit 102 determines, based on the relative position information, that the focus needs to be transferred to the display unit 104, so that the display unit 102 sends the identification information of the display unit 104 to the display unit 101. In this way, the display unit 101 sends the downward remote control instruction to the display unit 104, so that the display unit 104 changes the Weather icon control M to the focused state. In some embodiments, after the display unit 101 receives the identification information of the display unit 104 sent by the display unit 102, the display unit 101 may update the information recorded in step 3 to: forward a subsequently received remote control instruction to the display unit 104.
Step 6: When receiving the rightward remote control instruction sent by the remote control 200, the display unit 101 sends the rightward remote control instruction to the display unit 104. When receiving the rightward remote control instruction sent by the display unit 101, the display unit 104 detects that there is the Huawei Video icon control N on a right side of the Weather icon control M in the display unit 104, so that the focus is transferred to the Huawei Video icon control N. In some embodiments, the display unit 101 may forward, to the display unit 104 based on the updated information that is recorded in step 5 and that indicates that the remote control instruction needs to be forwarded to the display unit 104, the rightward remote control instruction received in step 6.

It may be understood that the focus transfer within the display unit and the focus transfer between the display units relate to relative position information of a control or position information of a boundary control, which is described in detail below.

The relative position information (which may also be referred to as a focus transfer vector) of the control may be used to identify a focus transfer policy of the control. A specific transfer vector is obtained based on a control coordinate magnitude relationship. The relative position information of the control is denoted as TransVec. A specific format is as follows:

| | | | |
|---|---|---|---|
| Upward transferred control | Downward transferred control | Leftward transferred control | Rightward transferred control |

As shown in the display unit 104 in FIG. 1, relative position information of each control in the display unit 104 includes the following.

A focus transfer policy of the Weather icon control M is used as an example. The focus transfer policy of the Weather icon control M includes: no upward transferred control, a downward transferred control (the Recorder icon control O), no leftward transferred control, and a rightward transferred control (the Huawei Video icon control N).

Therefore, TransVec of the Weather icon control M has no upward transferred control, the downward transferred control is the Recorder icon control O, a leftward transferred control is a Health icon control J, and the rightward transferred control is the Huawei Video icon control N. For example, in a possible implementation, a vector {-, O, -, N} may be used to record TransVec of the Weather icon control M. A first dimension and a third dimension of the vector are null values (which are denoted as "-"), and indicate that the Weather icon control M does not have an upward transferred control or a leftward transferred control.

When the display unit receives a remote control instruction sent by a remote control 200, if a current display unit in which a focus control is located has another control in a remote control direction, the focus is transferred to a control that is closest to the control and that is in the remote control direction; and if there is no control in a remote control direction, the focus cannot be transferred in the direction in the display unit, and the focus transfer between the display units is entered.

It may be understood that, in addition to the foregoing technology for calibrating position information of each control in the display unit, boundary calibration of controls in the display unit is also a technology for calibrating the position information of each control in the display unit. An implementation is as follows:

Each display unit needs to calibrate a remote-controllable boundary of the current display unit. The remote-controllable boundary is controls on uppermost, lowermost, leftmost, and rightmost edges in the display unit. The control includes but is not limited to a button, a unit frame, a check box, and another operation unit that can obtain a remote control focus. Based on a coordinate magnitude relationship of all controls on a page, control coordinates in this embodiment are coordinates of upper left corners of the controls, may calibrate upper, lower, left, and right boundary controls of the display unit, and are denoted as position information (a boundary control vector) BorderVec of the boundary controls. A specific format is as follows:

| | | | |
|---|---|---|---|
| Upper boundary control | Lower boundary control | Left boundary control | Right boundary control |

In FIG. 1, an upper left corner of the display unit 101 is used as an origin, a horizontal rightward direction is a positive direction of an X-axis, and a vertical downward direction is a positive direction of a Y-axis.

It is assumed that coordinates of the Clock icon control A, the Calendar icon control B, a Files icon control C, and an Email icon control D in the display unit 101 are respectively (X_{A}, Y_{A}), (X_{B}, Y_{B}), (X_{C}, Y_{C}), and (X_{D}, Y_{D}). Because X_{A} = X_{C} < X_{B} = X_{D}, and Y_{A} = Y_{B} < Y_{C} = Y_{D}, position information (a boundary control vector) BorderVec of boundary controls of the display unit 101 is {A, C, A, B}. A specific policy for determining BorderVec is as follows:
selecting a control with a smallest Y coordinate for an upper boundary and if there are a plurality of controls with smallest Y coordinates, selecting a control with a smallest X coordinate;
selecting a control with a largest Y coordinate for a lower boundary and if there are a plurality of controls with largest Y coordinates, selecting a control with a smallest X coordinate;
selecting a control with a smallest X coordinate for a left boundary and if there are a plurality of controls with smallest X coordinates, selecting a control with a smallest Y coordinate; and
selecting a control with a largest X coordinate for a right boundary and if there are a plurality of controls with largest X coordinates, selecting a control with a smallest Y coordinate.

Similarly, it may be determined, by using the policy, that BorderVec of the display unit 102 is {E, G, E, F}, BorderVec of the display unit 104 is {M, O, M, N}, and BorderVec of the display unit 103 is {I, K, I, J}.

In some embodiments, BorderVec may be used to determine a control on which the focus should be located when the focus enters the display unit. For example, in step 3 of transferring the focus from the Calendar icon control B to the Gallery icon control E, the display unit 102 receives the rightward remote control instruction forwarded by the display unit 101 to the display unit 102, and the display unit 102 determines, based on BorderVec: {E, G, E, F} of the display unit 102, that a left ("right" is reversed) boundary control of the display unit 102 is the Gallery icon control E. Therefore, the display unit 102 determines that the focus should be located on the Gallery icon control E. In this way, the display unit 102 enables the Gallery icon control E to enter the focused state.

It may be understood that, in addition to the display units 101, 102, 103, and 104, the processors 1012, 1022, 1032, and 1042 in FIG. 2 may also be used as execution bodies of the foregoing steps, which is also applicable to the following.

The foregoing step 2, step 4, and step 6 are control cases in which the focus is transferred inside the display unit. Specifically, when the splicing screen 100 receives a remote control instruction sent by the remote control 200, if the display unit in which the current focus control is located has no other control in the remote control direction, the focus transfer policy between the display units is entered. Specifically, the display unit in which the current focus control is located determines, based on a coordinate magnitude relationship of all controls in the current display unit, whether there is a control in the remote control direction; and if yes, the focus is transferred to the control in the remote control direction; or if no, whether there is another display unit in the remote control direction is determined based on position information (that is, the relative position information) between display units.

The following further describes a control case in which the focus is transferred from a paired display unit to another non-paired display unit.

Specifically, in some embodiments, if the remote control sends the remote control instruction to the paired display unit, because the paired display unit may obtain relative position information between the paired display unit and adjacent non-paired units, after receiving the remote control instruction sent by the remote control, the paired display unit determines, based on the relative position information between the paired display unit and the adjacent non-paired display units and the remote control instruction, identification information of a display unit to which the focus is to be transferred or the remote control instruction is to be sent. Therefore, the paired display unit may determine, based on the identification information, a non-paired display unit that is in other non-paired display units adjacent to the paired display unit and to which the remote control instruction needs to be sent, to indicate the determined non-paired display unit adjacent to the paired display unit to select a target control. For example, step 3 in FIG. 4 is a control case in which the focus is transferred from a paired display unit to a non-paired display unit.

The following uses the foregoing step 3 as an example to specifically describe a technical solution of transferring the focus from a paired display unit to a non-paired display unit.

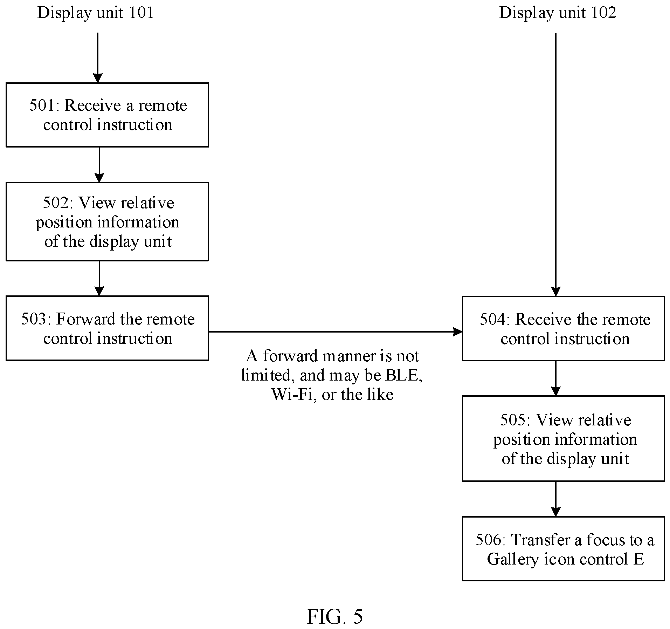

FIG. 5 is a schematic flowchart of interaction that is of transferring a focus from a paired display unit 101 to a non-paired display unit 102 and that is corresponding to step 3 in FIG. 4 according to some embodiments of this application. The interaction procedure includes the following steps.

Step 501: The display unit 101 receives a remote control instruction, where the remote control instruction is a remote control instruction for transferring the focus rightwards.

For example, as shown in FIG. 1, the user may tap the rightward remote control control 201c, so that the remote control 200 sends the rightward transfer remote control instruction to the display unit 101.

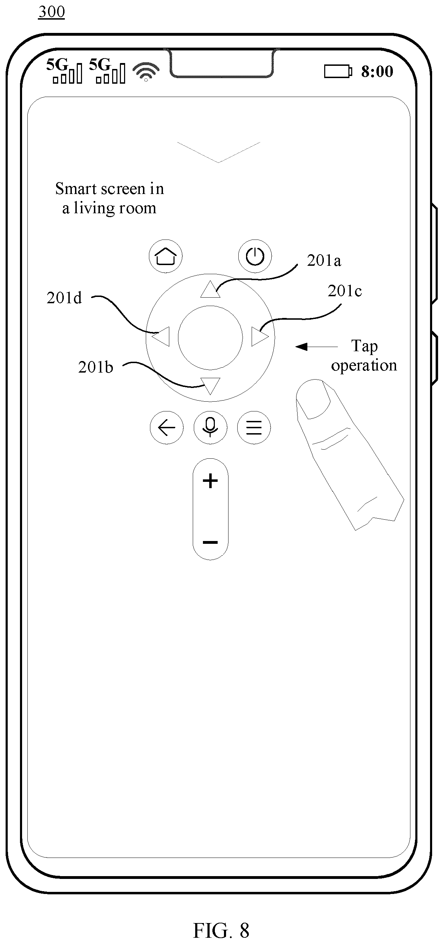

For another example, as shown in FIG. 8, the user may tap the rightward remote control control 201c in a display interface, so that a mobile phone 300 sends the rightward transfer remote control instruction to the display unit 101.

Step 502: The display unit 101 views relative position information of the display unit 101, and determines identification information of a next display unit to which the focus is to be transferred.

In some embodiments, because there is no other internal control that is of the display unit 101 and that is on the right side of the Calendar icon control B in the display unit 101, the display unit 101 determines to forward the remote control instruction to another display unit. Therefore, the display unit 101 views the relative position information of the display unit 101, and determines the identification information of the next display unit to which the focus is to be transferred.

In some embodiments, the relative position information of the display unit 101 records the following information: a right side: the display unit 102 (or the identification information of the display unit 102), and a lower side: the display unit 103 (or identification information of the display unit 103).

In some embodiments, the display unit 101 searches, based on that the remote control instruction received in step 501 is "right", the relative position information for whether there is another display unit on the right side of the display unit 101. In this example, there is the display unit 102 on the right side of the display unit 101, so that the display unit 101 determines the identification information of the display unit 102 to which the focus is to be transferred.

Step 503: The display unit 101 forwards the remote control instruction based on the identification information of the next display unit to which the focus is to be transferred.

In some embodiments, the identification information of the next display unit to which the focus is to be transferred may be the identification information of the display unit 102. The display unit 101 sends the remote control instruction to the display unit 102 based on the identification information of the display unit 102. The identification information of the display unit 102 may be an IP address, a MAC address, or the like of the display unit 102.

Step 504: The display unit 102 receives the remote control instruction.

Step 505: After receiving the remote control instruction, the display unit 102 views the relative position information of the display elements, and determines a control to which the focus is to be transferred.

In some embodiments, position information of boundary controls in the position information of the display elements in the display unit 102 includes the following information: the Gallery icon control E in the upper left corner, the Music icon control G in the lower left corner, the Notepad icon control F in the upper right corner, and the Calculator icon control H in the lower right corner.

In some embodiments, the display unit 102 searches, based on that the remote control instruction received in step 504 is "right", the position information of the display elements for a control in the upper left corner of the display unit 102, for example, the Gallery icon control E in the upper left corner. In this way, the display unit 102 determines that a control to which the focus is to be transferred is the Gallery icon control E in the upper left corner.

In some embodiments, after receiving the remote control instruction, the display unit 102 views the position information (the boundary control vector) of the boundary controls in the relative position information of the display elements, and determines the control to which the focus is to be transferred. For example, the boundary control vector of the display unit 102 is {E, G, E, F}. The display unit 102 searches, based on that the remote control instruction received in step 504 is "right", the position information of the display elements for the control in the upper left corner of the display unit 102, for example, the Gallery icon control E in the upper left corner. In this way, the display unit 102 determines that the control to which the focus is to be transferred is the Gallery icon control E in the upper left corner.

Step 506: The display unit 102 transfers the focus to the Gallery icon control E on a left boundary.

In some embodiments, the display unit 102 transfers the focus to the Gallery icon control E on the left boundary based on a result obtained in step 505.

The following describes a control case in which the focus is transferred from a non-paired display unit to another non-paired display unit.

Specifically, in some embodiments, if the remote control sends the remote control instruction to the paired display unit, after receiving the remote control instruction sent by the remote control, the paired display unit sends the remote control instruction to the non-paired display unit in which a display selected control is located. The non-paired display unit in which the display selected control is located determines, based on relative position information between the non-paired display unit and an adjacent display unit and the remote control instruction, identification information of the another non-paired display unit to which the focus is to be transferred, and sends the identification information to the paired display unit. The paired display unit forwards, to the another non-paired display unit to which the focus is to be transferred, a remote control instruction that carries the identification information. The another non-paired display unit to which the focus is to be transferred displays a selected control, so that the paired display unit sends the remote control instruction to the non-paired display unit to which the focus is to be transferred, and another non-paired display unit adjacent to the paired display unit is indicated to select a target control.

For example, step 5 in FIG. 4 is a control case in which the focus is transferred from a non-paired display unit to a non-paired display unit. The following uses step 5 as an example to specifically describe a technical solution in which the focus is transferred from a non-paired display unit to a non-paired display unit.

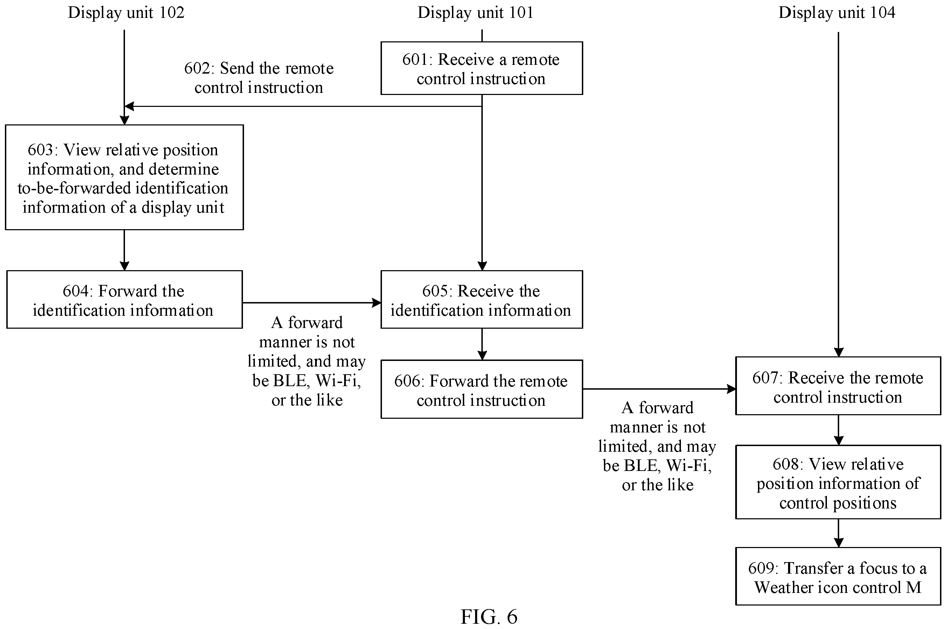

For example, FIG. 6 is a schematic flowchart of interaction that is of transferring a focus from a Music icon control G of a non-paired display unit 102 to a Weather icon control M of a non-paired display unit 104 and that is corresponding to step 5 in FIG. 4 according to some embodiments of this application. The interaction procedure includes the following steps.

Step 601: The display unit 101 receives a remote control instruction, where the remote control instruction is a remote control instruction for transferring the focus downwards.

In some embodiments, as shown in FIG. 1, the user may tap the downward remote control control 201b, so that the remote control 200 sends the downward transfer remote control instruction to the display unit 101.

For another example, as shown in FIG. 8, the user may tap the downward remote control control 201b in a display interface, so that a mobile phone 300 sends the downward transfer remote control instruction to the display unit 101.

Step 602: The display unit 101 sends the remote control instruction to the display unit 102.

In an implementation, the display unit 101 records information that indicates whether the received remote control instruction needs to be forwarded currently, and information that indicates a device to which the remote control instruction needs to be forwarded if forwarding needs to be performed. Therefore, the display unit 101 may forward, based on information that is currently recorded by the display unit 101 and that indicates that forwarding needs to be performed and information that indicates that the display unit 102 needs to be forwarded to, the received remote control instruction to the display unit 102.

Step 603: The display unit 102 views relative position information of the display unit 102, and determines identification information of a next display unit to which the focus is to be transferred.

In some implementations, the relative position information PositionVec of the display unit 102 includes position information and identification information of the display unit 101 and the display unit 104 that are adjacent to the display unit 102. Therefore, the display unit 102 may view the relative position information of the display unit 102, and determine the identification information of the next display unit to which the focus is to be transferred.

A technical solution for calibrating relative position information (a position vector) of each display unit in the splicing screen 100 is as follows:
In the splicing screen 100 shown in FIG. 1, each display unit is in a plane, and each display unit identifies display units adjacent to the display unit in upper, lower, left, and right positions around the display unit. If there is no display unit adjacent to the display unit at a side, a corresponding position identifier is set to none.

After the display unit adjacent to the display unit is identified, a corresponding unique identifier is recorded, and is recorded as relative position information (a position vector) PositionVec of the display unit. A specific format is as follows:

| | | | |
|---|---|---|---|
| Unique identifier of a display unit on an upper side | Unique identifier of a display unit on a lower side | Unique identifier of a display unit on a left side | Unique identifier of a display unit on a right side |

In some embodiments, PositionVec of the display unit 101 is {none, a unique identifier of the display unit 103, none, a unique identifier of the display unit 102}, and identification information of the display unit may include but is not limited to a Bluetooth MAC address, a Wi-Fi MAC address, an IP address, and the like of the display unit.

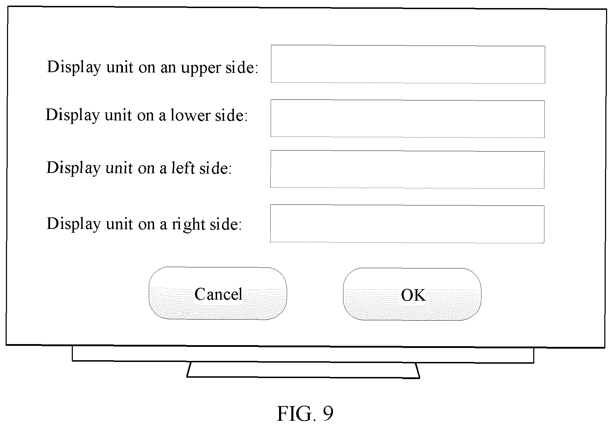

It may be understood that, in another embodiment, if the display units in the splicing screen are not in a same plane, display units in upper, lower, left, and right positions around each display unit may be manually specified. Specifically, because the NFC module works based on a near field communication principle, only information about another NFC module within a specific distance (for example, 10 cm) nearby can be read. Therefore, when the display units are not in the same plane or are far away from each other, the display unit cannot read, by using the NFC module, the display units at the upper, lower, left, and right positions around the display unit. For example, FIG. 9 is a user interface for inputting relative position information between display units according to some embodiments of this application. As shown in FIG. 9, the user may input identification information of the display units in input boxes of a display unit on an upper side, a display unit on a lower side, a display unit on a left side, and a display unit on a right side.

Step 604: The display unit 102 sends, to the display unit 101, identification information of a next display unit to which the focus is to be transferred, namely, the identification information of the display unit 104.

In some embodiments, the identification information of the display unit 104 may be a Bluetooth MAC address, a Wi-Fi MAC address, an IP address, or the like of the display unit 104.

Step 605: The display unit 101 receives, from the display unit 102, the identification information of the next display unit to which the focus is to be transferred, namely, the identification information of the display unit 104.

In some embodiments, after receiving the identification information of the display unit 104 sent by the display unit 102, the display unit 101 may record the identification information of the display unit 104.

For example, in an implementation, the display unit 101 records, identification information of a device to which a remote control instruction received next time is to be forwarded, as the identification information of the display unit 104. Therefore, when receiving the remote control instruction next time, the display unit 101 may directly determine, based on the information, to forward the remote control instruction to the display unit 104.

Step 606: The display unit 101 forwards the remote control instruction to the display unit 104 based on the identification information of the display unit 104.

In some embodiments, because the identification information of the display unit 104 is a unique identification information of the display unit 104, the display unit 101 may forward the remote control instruction to the display unit 104 based on the identification information of the display unit 104.

Step 607: The display unit 104 receives the remote control instruction.

Step 608: After receiving the remote control instruction, the display unit 104 views relative position information of each control in the display unit 104, and determines an icon control to which the focus is to be transferred, namely, the Weather icon control M.

In some embodiments, the relative position information of the display elements of the display unit 104 includes the following information: the Weather icon control M in the upper left corner, the Recorder icon control O in the lower left corner, the Huawei Video icon control N in the upper right corner, and the AppGallery icon control F in the lower right corner.

In some embodiments, the display unit 104 searches, based on that the remote control instruction received in step 607 is "down", the position information of the display elements for a control in the upper left corner of the display unit 104, for example, the Weather icon control M in the upper left corner. In this way, the display unit 104 determines that a control to which the focus is to be transferred is the Weather icon control M in the upper left corner.

In some embodiments, if the relative position information of the display elements of the display unit 104 includes, in addition to the position information of the following boundary controls, for example, the Weather icon control M in the upper left corner, the Recorder icon control O in the lower left corner, the Huawei Video icon control N in the upper right corner, and the AppGallery icon control F in the lower right corner, another icon control is further included in a range surrounded by the boundary controls, to improve determining efficiency, the position information of the boundary controls in the position information of the display elements of the display unit 104 includes the following information: the Weather icon control M in the upper left corner, the Recorder icon control O in the lower left corner, the Huawei Video icon control N in the upper right corner, and the AppGallery icon control F in the lower right corner. After receiving the remote control instruction, the display unit 104 views position information (a boundary control vector) that is of boundary controls and that is in the relative position information of each control in the display unit 104, to obtain the Weather icon control M of the display unit 104 on a left boundary.

In some embodiments, the display unit 104 may record an icon control that is of the display unit 104 and to which the focus is to be transferred, namely, the Weather icon control M.

For example, in an implementation, the display unit 104 records, as the Weather icon control M, an icon control to which a remote control instruction received next time is to be forwarded. Therefore, when receiving a remote control instruction next time, the display unit 101 may directly determine, based on the record information, to forward the remote control instruction to the Weather icon control M.

Step 609: The display unit 104 transfers the focus to the Weather icon control M on the left boundary.

In this way, in this embodiment of this application, the remote control 200 can operate all display units in the splicing screen by pairing with any display unit in the splicing screen 100 without a plurality of times of pairing, thereby achieving an objective of conveniently and quickly controlling any display unit in the splicing screen.

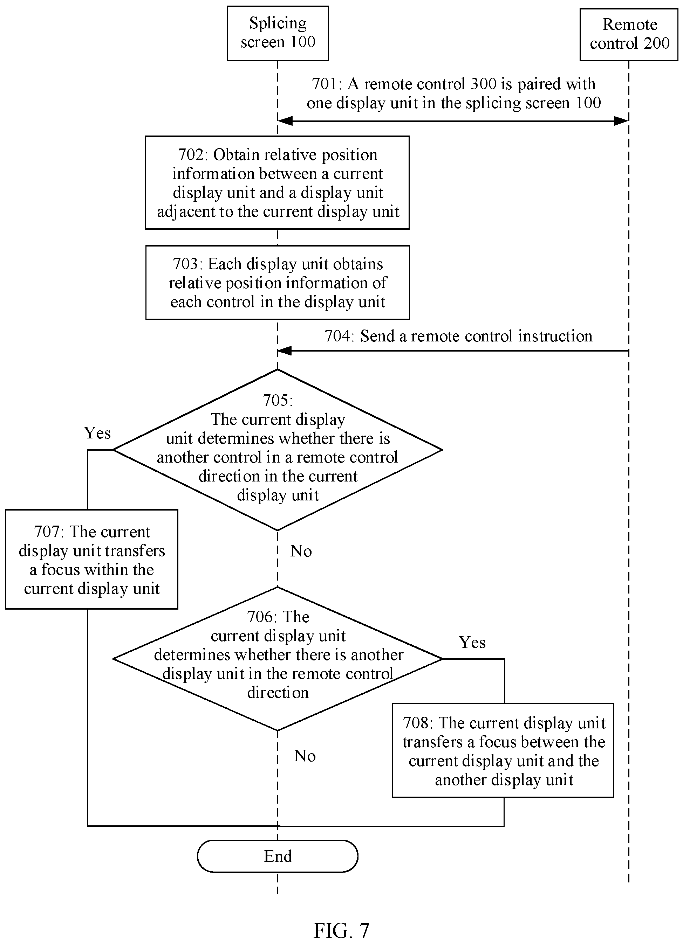

FIG. 7 is a schematic flowchart of a method for controlling a splicing screen according to some embodiments of this application. As shown in FIG. 7, the method includes the following steps.

Step 701: The remote control 200 is paired with one display unit in the splicing screen 100.

The pairing in this embodiment of this application is referred to as establishing a communication connection (for example, a Bluetooth communication connection) or connecting to a same network (for example, a Wi-Fi connection) through short-range communication.

It may be understood that, in some embodiments, the remote control 200 may be paired with one display unit in the splicing screen 100 through short-range communication, and each display unit is in a same near field communication environment, for example, Bluetooth pairing. It is assumed herein that the display unit 101 has completed pairing with the remote control 200.

For example, in this embodiment of this application, a display unit that is in the splicing screen 100 and that is paired with the remote control 200 is referred to as a "paired display unit", and a display unit that is in the splicing screen 100 and that is not paired with the remote control 200 is referred to as a "non-paired display unit".

It may be understood that, in this embodiment of this application, the remote control 200 may be the remote control device that is shown in FIG. 1 and that has physical buttons and that is specially configured to control a display unit, or may be a virtual remote control displayed in a terminal device with a screen, such as a mobile phone. FIG. 8 is a schematic diagram of a remote control interface of a mobile phone 300 according to some embodiments of this application. As shown in FIG. 8, virtual buttons corresponding to the physical buttons on the remote control 200 in FIG. 1 may be included. In this case, step 701 may be that the mobile phone 300 is paired with one display unit in the splicing screen 100.

Step 702: A current display unit in the splicing screen 100 obtains relative position information between the current display unit and a display unit adjacent to the current display unit.

It should be understood that step 702 is not limited to need to be performed after step 701 in this embodiment of this application. Step 702 may alternatively be performed before step 701 or simultaneously with step 701, provided that step 702 is performed before step 706.

The current display unit is a display unit that displays the focus, that is, a display unit that displays a selected control. The current display unit may be any display unit in the splicing screen 100.

In some embodiments, after one display unit in the splicing screen 100 is paired with the remote control 200, the focus is first displayed in the paired display unit. In this case, the paired display unit is the current display unit. As the user presses direction buttons on the remote control 200, the focus may be transferred between controls in the paired display unit, or may be transferred between controls of different display units. If the focus is transferred to a control of a non-paired display unit in the splicing screen 100, the non-paired display unit is the current display unit.

Step 703: Each display unit in the splicing screen 100 obtains relative position information of each control in the display unit.

In addition, in some other embodiments, if each display unit in the splicing screen 100 obtains a remote control instruction, the relative position information of each control in the display unit may be obtained.

Step 706: The current display unit in the splicing screen 100 determines whether there is another display unit in the remote control direction, and if no, ends the process, or if yes, proceeds to step 708.

It may be understood that this step is the same as the foregoing control cases in which the focus is transferred from the paired display unit to the non-paired display unit and the focus is transferred from the non-paired display unit to another non-paired display unit.

For example, corresponding to step 502 in FIG. 5, in some embodiments, the relative position information of the display unit 101 records the following information: the right side: the display unit 102 (or the identification information of the display unit 102), and the lower side: the display unit 103 (or the identification information of the display unit 103).

In some embodiments, the display unit 101 searches, based on that the remote control instruction received in step 501 is "right", the relative position information for whether there is another display unit on the right side of the display unit 101. In this example, there is the display unit 102 on the right side of the display unit 101, so that the display unit 101 determines the identification information of the display unit 102 to which the focus is to be transferred.

For another example, in some embodiments, the relative position information of the display unit 102 records the following information: a right side: none, and the lower side: the display unit 104 (or the identification information of the display unit 104).

In some embodiments, the display unit 102 searches, based on that the remote control instruction received in step 501 is "right", the relative position information for whether there is another display unit on the right side of the display unit 102. In this example, there is no display unit on the right side of the display unit 102, so that focus transfer is not performed.

Step 707: The current display unit in the splicing screen 100 transfers the control within the current display unit.

For example, step 2, step 4, and step 6 in FIG. 4 are transfer that is of the control and that is within the display unit.

Step 708: The current display unit in the splicing screen 100 transfers the control between the current display unit and another display unit in the remote control direction.

For example, step 3 in FIG. 4 is the control case in which the focus is transferred from the paired display unit to the non-paired display unit. For another example, step 5 in FIG. 4 is the control case in which the focus is transferred from the non-paired display unit to the non-paired display unit.

This embodiment of this application is applicable to a splicing screen formed by splicing a plurality of displays or display screens (which are referred to as display units below), and is also applicable to a multi-screen system that includes a plurality of independent display devices. The plurality of independent display devices may include a plurality of tablets, a plurality of computers, a plurality of smart screens, or the like, or any two or more of a tablet, a computer, and a smart screen.

The following describes the technical solutions of this application by using a scenario in which three smart screens are placed in different positions in a conference room.

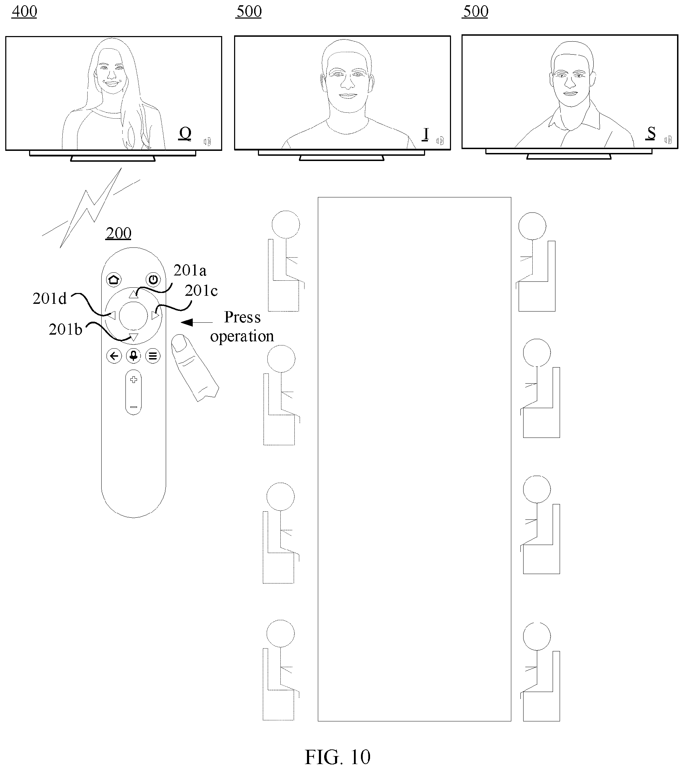

FIG. 10 is a schematic diagram of an application scenario of another method for controlling a multi-screen system according to some embodiments of this application. As shown in FIG. 10, in the conference scenario, a smart screen 400, a smart screen 500, and a smart screen 600 are included, and a present participant may make a video call with a remote participant by using the smart screen 400, the smart screen 500, and the smart screen 600. According to the method provided in this embodiment of this application, in a conference process, an on-site person may conveniently control the smart screen 400, the smart screen 500, and the smart screen 600 by using one remote control, for example, adjusting a volume and setting a video call. After the conference ends, the on-site person may sequentially close the smart screen 400, the smart screen 500, and the smart screen 600 by using a remote control 200.

For ease of description, the following uses only volume adjustment buttons in display interfaces of the smart screen 400, the smart screen 500, and the smart screen 600 as an example for description, but is not limited thereto. The display interfaces of the smart screen 400, the smart screen 500, and the smart screen 600 may further include more controls.

For example, when a user wants to transfer a focus from a volume adjustment button Q of the smart screen 400 to a volume adjustment button I of the smart screen 500 by using the remote control 200, and then transfer the focus to a volume adjustment button S of the smart screen 600, and when the focus is the volume adjustment button Q, the volume adjustment button I, and the volume adjustment button S, in a process in which the smart screen 400 receives a volume-up instruction formed by an operation performed by the user on the remote control 200 to increase playback volumes of the smart screen 400, the smart screen 500, and the smart screen 600, the smart screen 400 currently establishes a wireless connection to the remote control 200. The smart screen 400 selects the volume adjustment button Q according to a remote control instruction. The smart screen 400 receives the volume-up instruction formed by the operation performed by the user on the remote control 200, so that the playback volume of the smart screen 400 is increased.

The smart screen 400 may obtain relative position information between the smart screen 400 and the adjacent smart screen 500. If a current focus is the volume adjustment button Q in the smart screen 400, when the user presses a rightward remote control button 201c, after the smart screen 400 receives a rightward remote control instruction, the smart screen 400 may determine, based on the rightward remote control instruction and the foregoing relative position information between the smart screen 400 and the adjacent smart screen 500, that a final transfer target of the focus is the smart screen 500, and then the smart screen 500 sends the foregoing rightward remote control instruction to the smart screen 500. After receiving the rightward remote control instruction, the smart screen 500 determines and controls, based on position information of each display element (for example, an icon, a search bar, or a display box displayed on a display unit) in the smart screen 500, that a final target of the focus is located on the volume adjustment button I of the smart screen 500. The smart screen 500 receives the volume-up instruction formed by the operation performed by the user on the remote control 200, so that the playback volume of the smart screen 500 is increased.

After the playback volume of the smart screen 500 is increased, the current focus is the volume adjustment button I in the smart screen 500. When the user presses the rightward remote control button 201c, after the smart screen 400 receives the rightward remote control instruction, the smart screen 400 sends the rightward remote control instruction to the smart screen 500. The smart screen 500 may determine, based on the rightward remote control instruction and relative position information between the smart screen 500 and the smart screen 600, identification information of a final transfer target of the focus, namely, identification information of the smart screen 600. Then, the smart screen 500 feeds back the identification information of the smart screen 600 to the smart screen 400. The smart screen 400 sends the rightward remote control instruction to the smart screen 600 based on the identification information of the smart screen 600. After receiving the rightward remote control instruction, the smart screen 600 determines, based on relative position information of each display element (such as an icon, a search bar, or a display box displayed on a display unit) in the smart screen 600, that a final transfer target of the focus is the volume adjustment button S on the smart screen 600. The smart screen 600 receives the volume-up instruction formed by the operation performed by the user on the remote control 200, so that the playback volume of the smart screen 600 is increased. In this way, a function of controlling a plurality of display units in the splicing screen by one remote control is implemented.

In this way, in this embodiment of this application, any display unit in the splicing screen is paired with the remote control, so that a function of controlling a plurality of display units in the splicing screen by one remote control can be implemented, and the remote control does not need to be switched for a plurality of times to be connected to different display units, thereby simplifying an entire control process, reducing time consumption, and improving user experience.

In some cases, the disclosed embodiments may be implemented by hardware, firmware, software, or any combination thereof. The disclosed embodiments may alternatively be implemented as instructions carried by or stored on one or more temporary or non-temporary machine-readable (for example, computer-readable) storage media, and the instructions may be read and executed by one or more processors. For example, the instructions may be distributed through a network or by another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROM), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium that is suitable for storing or transmitting electronic instructions or information in a machine-readable (for example, computer-readable) form.

In the accompanying drawings, some structural or method features may be shown in a particular arrangement and/or order. However, it should be understood that such a particular arrangement and/or order may not be needed. In some embodiments, these features may be arranged in a manner and/or order different from that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in the device embodiments of this application are logic units/modules. Physically, one logic unit/module may be one physical unit/module, or may be a part of one physical unit/module, or may be implemented by a combination of a plurality of physical units/modules. Physical implementations of these logic units/modules are not the most important, and a combination of functions implemented by these logic units/modules is a key to resolving technical problems proposed in this application. In addition, to highlight an innovative part of this application, a unit/module that is not closely related to resolving the technical problems proposed in this application is not introduced in the foregoing device embodiments of this application. This does not indicate that there is not another unit/module in the foregoing device embodiments.

It should be noted that, in examples and the specification of this patent, relational terms such as first and second are only used to distinguish one entity or operation from another entity or operation, and do not necessarily require or imply that any actual relationship or sequence exists between these entities or operations. Moreover, terms "include", "comprise", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by a statement "includes a" does not, without more constraints, preclude the presence of additional identical elements in the process, method, article, or device that includes the element.

Although this application has been illustrated and described with reference to some preferred embodiments of this application, a person of ordinary skill in the art should understand that various changes may be made to this application in form and detail without departing from the spirit and scope of this application.

## Claims

1. A method for controlling a multi-screen system, wherein the multi-screen system comprises at least a first display unit and a second display unit, and the method comprises:
establishing, by the first display unit, a communication connection to a remote control device;
displaying, by the first display unit, a first display element in a focused state;
receiving, by the first display unit, a first remote control instruction sent by the remote control device;
sending, by the first display unit, the first remote control instruction to the second display unit; and
displaying, by the second display unit in response to the received first remote control instruction, a second display element in the focused state, wherein the first display element in the first display unit is no longer in the focused state.

2. The method according to claim 1, wherein the sending, by the first display unit, the first remote control instruction to the second display unit specifically comprises:
sending, by the first display unit, the first remote control instruction to the second display unit based on that the first remote control instruction is a remote control instruction in a first direction, there is no other display element capable of entering the focused state in the first direction of the first display element, and a display unit in the first direction of the first display unit is the second display unit.

3. The method according to claim 1 or 2, wherein the multi-screen system further comprises a third display unit, and the method further comprises:
receiving, by the first display unit, a second remote control instruction sent by the remote control device;
sending, by the first display unit, the second remote control instruction to the second display unit that is displaying a third display element in the focused state, wherein the third display element and the second display element are a same display element or different display elements;
sending, by the second display unit, first identification information of the third display unit to the first display unit;
sending, by the first display unit, the second remote control instruction to the third display unit based on the first identification information; and
displaying, by the third display unit in response to the received second remote control instruction, a fourth display element in the focused state, wherein the third display element in the second display unit is no longer in the focused state.

4. The method according to claim 3, wherein the sending, by the second display unit, first identification information of the third display unit to the first display unit specifically comprises:
sending, by the second display unit, the first identification information of the third display unit to the first display unit based on that the second remote control instruction is a remote control instruction in a second direction, there is no other display element capable of entering the focused state in the second direction of the third display element, and a display unit in the second direction of the second display unit is the third display unit, wherein
the second direction and the first direction are a same direction or different directions.

5. The method according to any one of claims 1 to 4, wherein
the displaying, by the second display unit in response to the received first remote control instruction, a second display element in the focused state specifically comprises:
displaying, by the second display unit, the second display element in the focused state based on the first remote control instruction and relative position information of each display element in the second display unit.

6. The method according to any one of claims 1 to 5, wherein near field communication NFC modules are disposed on edges of the first display unit and the second display unit, and the NFC modules are configured to read identification information of an adjacent display unit.

7. The method according to claim 6, wherein a first NFC module is disposed on a first edge of the first display unit, a second NFC module is disposed on a second edge of the second display unit, the first edge is adjacent to the second edge, and the method further comprises:
reading, by the first display unit by using the first NFC module, second identification information that is of the second display unit and that is written in the second NFC module, wherein
the second identification information is used by the first display unit to send the first remote control instruction to the second display unit based on the second identification information.

8. The method according to any one of claims 1 to 7, wherein the first display element and the second display element each comprise any one or more of the following: an icon control, a search bar, a check box, an option button, and a button control.

9. The method according to any one of claims 1 to 8, wherein the first display unit and the second display unit each comprise any one or more of the following: a display, a tablet, a computer, a television, a smart screen, and a large-screen device.

10. The method according to any one of claims 1 to 9, wherein the remote control device comprises a remote control and/or a terminal device.

11. A computer-readable storage medium, wherein the computer-readable storage medium stores instructions, and when the instructions are executed on a first display unit, the first display unit is enabled to perform the steps performed by the first display unit in the method according to any one of claims 1 to 10.

12. An electronic device, comprising:
one or more processors, and a memory, wherein
the memory stores one or more computer programs, the one or more computer programs comprise instructions, and when the instructions are executed, the electronic device is enabled to perform the steps performed by the first display unit in the method according to any one of claims 1 to 10.
